**Europäisches Patentamt**

**European Patent Office**

**Office européen des brevets**

(11) Veröffentlichungsnummer: **0 053 230**
A1

## (12) EUROPÄISCHE PATENTANMELDUNG

(21) Anmeldenummer: **81107386.5**

(22) Anmeldetag: **18.09.81**

(51) Int. Cl.³: **H 04 J 3/04**, H 04 J 3/06

(30) Priorität: **27.11.80 DE 3044620**

(43) Veröffentlichungstag der Anmeldung: **09.06.82**
**Patentblatt 82/23**

(84) Benannte Vertragsstaaten: **AT CH DE FR GB LI NL SE**

(71) Anmelder: **Licentia Patent-Verwaltungs-GmbH,**
**Theodor-Stern-Kai 1, D-6000 Frankfurt/Main 70 (DE)**

(72) Erfinder: **Rauth, Erich, Ing.grad., Falkenweg 18,**
**D-7151 Auenwald (DE)**
Erfinder: **Schmack, Hans-Jürgen, Ing.grad.,**
**Wunnensteinstrasse 3, D-7151 Allmersbach i.T. (DE)**

(74) Vertreter: **Schickle, Gerhard, Dipl.-Ing. et al, Licentia**
**Patent-Verwaltungs-GmbH Theodor-Stern-Kai 1,**
**D-6000 Frankfurt/Main 70 (DE)**

(54) **Digitales Nachrichtenübertragungssystem.**

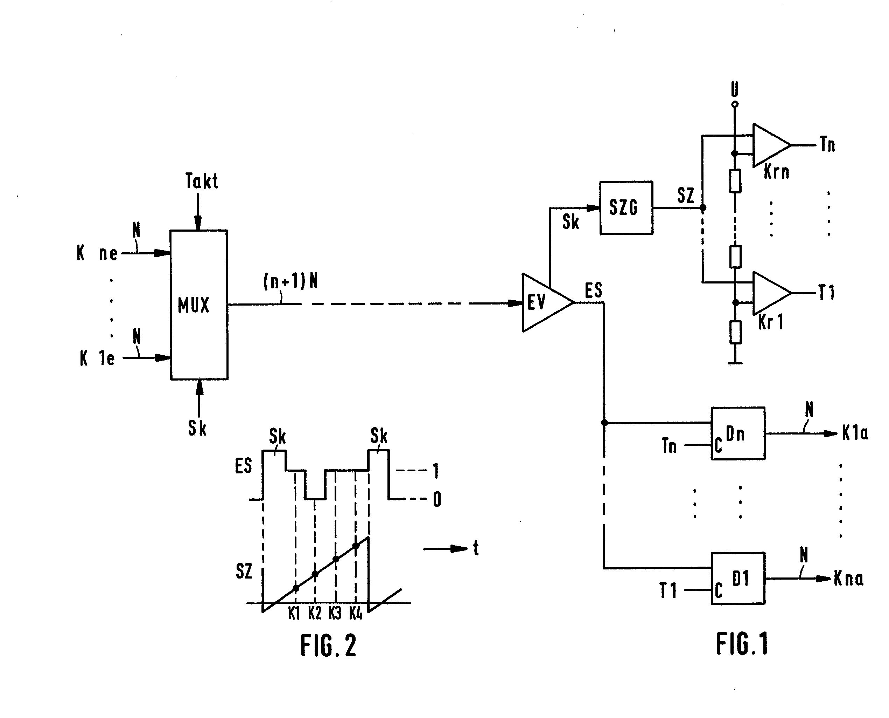

(57) Die Erfindung betrifft ein digitales in Zeitmultiplex arbeitendes Nachrichtenübertragungssystem, bei dem von n Nachrichtenkanälen (Kle...Kne) und einem Synchronisierkanal gleicher Bitrate jeweils 1 Bit zu einem Rahmen von n+1 Bit zusammengefasst sind und ist dadurch gekennzeichnet, daß im Synchronisierkanal ein Synchronisierkriterium (SK) übertragen wird, das empfangsseitig vom Empfangssignal abgetrennt und zur Ansteuerung eines Sägezahngenerators (SZG) verwendet wird, dem den n Nachrichtenkanälen (K1...Kn) mit gleichem Amplitudenabstand zugeordnete Amplitudenvergleichsstufen (Kr1...Krn) nachgeschaltet sind, und daß den n Nachrichtenkanälen n Datenflipflops (D1...Dn) zugeordnet sind, auf deren Dateneingänge das Empfangssignal gelegt ist, deren Takteingänge (C) jeweils mit dem Schaltausgang (T1...Tn) der zugeordneten Amplitudenvergleichsstufen (Kr1...Krn) verbunden sind und an deren Ausgängen jeweils das Empfangssignal (K1a...Kna) des betreffenden Kanals abgeifbar ist (Fig. 1).

- i -

Licentia Patent-Verwaltungs-GmbH
Theodor-Stern-Kai 1
D-6000 Frankfurt 70

NE2-BK/Ruf/wei
BK 80/120

## Digitales Nachrichtenübertragungssystem

Die Erfindung betrifft ein digitales Nachrichtenübertragungssystem gemäß Oberbegriff des Hauptanspruchs.

Derartige Übertragungssysteme sind bekannt. Problematisch ist bei diesen Systemen die Synchronisation auf die einzelnen Bits bzw. auf den Rahmen. Üblicherweise wird der Bittakt mit Hilfe von PLL-Schleifen rückgewonnen, während die Rahmensynchronisation mit Hilfe eines konstanten Synchronisationsbits oder -worts, das aus mehreren Bits besteht, erfolgt.

Diese Art der Synchronisation ist aufwendig.

Aufgabe der vorliegenden Erfindung war es daher, ein digitales Nachrichtenübertragungssystem der obigen Art anzugeben, bei dem die Rahmen- bzw. Bitsynchronisation in unaufwendiger Weise erfolgt.

Die Lösung erfolgt mit Hilfe der in den Patentansprüchen angegebenen Mittel.

Das erfindungsgemäße Nachrichtenübertragungssystem eignet sich vorzüglich für hohe Übertragungsbitraten bei erheblich reduziertem Aufwand gegenüber bekannten Systemen.

Es erfolgt die Beschreibung der Erfindung anhand der Figur. Auf der Senderseite werden einem Multiplexer MUX und seinen Eingänngen K1e bis Kne n Nachrichtenkanäle und ein Synchronisierkanal SK der gleichen Bitrate N zugeführt. Mit Hilfe eines Taktes wird das breitbandige Mutliplexsignal mit der Bitrate $(n + 1) \times N$ erzeugt und auf den Nachrichtenkanal gegeben.

Empfangsseitig wird das Eingangssignal mittels eines Eingangsverstärkers EV verstärkt, dessen Ausgangssignal jeweils auf die Eingänge eines den Kanälen zugeordneten taktbaren Flipflops D1 bis Dn zugeführt ist. Dem Empfangsverstärker ist weiterhin das Synchronisierkriterium SK entnehmbar und dem Eingang eines Sägezahngenerators SZG zuführbar, dessen ausgangsseitige Sägezahnspannung auf die Eingänge von n Komparatoren Kr1 bis Krn gegeben wird. Die Vergleichseingänge der Komparatoren sind jeweils auf einen Abgriff einer Serienschaltung von n gleich großen nicht näher bezeichneten Widerständen, die an eine Vergleichsspannung U gelegt ist, derart angeschaltet, daß ein Amplitudenvergleich in n äquidistantem Amplitudenstufen erfolgen kann, wobei jedem Komparator eine diskrete Stufe die der Rangfolge des jeweiligen Kanals entspricht, zugeordnet ist. Die Ausgänge der Komparatoren sind jeweils mit den Takteingängen T1 bis Tn der den Kanälen zugeordneten D-Flipflops D1 bis Dn verbunden.

Die Funktionsweise kann mit Hilfe der Figur 2 näher erklärt werden. Hier ist über der Zeit aufgetragen im oberen Teil das Empfangssignal ES, das zu Anfang einen überhöhten Synchronisationsimpuls SK und anschließend die Bitinformation von n = 4 Kanälen beinhaltet. Im unteren Teil der Figur 2 ist die Sägezahnspannung SZ über der Zeit aufgetragen, die jeweils mit Beginn des Synchronisationsimpulses aufsteigend verläuft. Bei Erreichen der durch Kreise gekennzeichneten Schwellen der Komparatoren wird jeweils das zugeordnete D-Flipflop getaktet, wodurch der in diesem Augenblick erreichte Wert des Empfangssignals eingespeichert wird. An den Ausgängen der D-Flipflops entsteht somit wieder die eingegebene Bitfolge der einzelnen Kanäle mit der Bitrate N.

Selbstverständlich bleibt das erfindungsgemäße System nicht nur auf 2-stufige Pulsamplituden- oder -codemodulation beschränkt, sondern ist auch bei mehrstufigen Modulationen anwendbar.

- - - - - - -

- 4 -

Licentia Patent-Verwaltungs-GmbH         NE2-BK/Ruf/wei
Theodor-Stern-Kai 1                       BK 80/120
D-6000 Frankfurt 70

Patentansprüche

1. Digitales in Zeitmultiplex arbeitendes Nachrichtenübertragungssystem, bei dem von n Nachrichtenkanälen und einem Synchronisierkanal gleicher Bitrate jeweils 1 Bit zu
   einem Rahmen von n + 1 Bit zusammengefaßt sind, dadurch
   gekennzeichnet, daß im Synchronisierkanal ein Synchronisierkriterium (SK) übertragen wird, das empfangsseitig vom
   Empfangssignal abgetrennt und zur Ansteuerung eines Sägezahngenerators (SZG) verwendet wird, dem den n Nachrichtenkanälen (K1...Kn) mit gleichem Amplitudenabstand zugeordnetem Amplitudenvergleichsstufen (Kr1...Krn) nachgeschaltet
   sind, und daß den n Nachrichtenkanälen n Datenflipflops
   (T1...Tn) zugeordnet sind, auf deren Dateneingänge das
   Empfangssignal gelegt ist, deren Takteingänge (C) jeweils
   mit dem Schaltausgang (T1...Tn) der zugeordneten Amplitudenvergleichsstufen (Kr1...Krn) verbunden sind und an deren Ausgängen jeweils das Empfangssignal (K1a...Kna) des
   betreffenden Kanals abgreifbar ist.

2. Digitales Nachrichtensystem nach Anspruch 1, dadurch gekennzeichnet, daß das Synchronisierkriterium (SK) ein Synchronisierimpuls mit überhöhter Amplitude ist, der empfangsseitig mittels Amplitudenschwellwertschalter abgetrennt wird.

3. Digitals Nachrichtensystem nach Anspruch 1 und 2, dadurch gekennzeichnet, daß das Empfangssignal durch einen Eingangsverstärker (EV) verstärkbar ist, in dem der Amplitudenschwellwertschalter integriert ist.

4. Digitales Nachrichtensystem nach einem der vorhergehenden Ansprüche, gekennzeichnet durch die Verwendung bei breitbandigen integrierten Glasfasernetzen.

FIG.2

FIG.1

Europäisches
Patentamt

**EUROPÄISCHER RECHERCHENBERICHT**

Nummer der Anmeldung

EP 81 10 7386

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| Y | US - A - 2 829 280 (W.M. GOODALL) | 1 | H 04 H 3/04 |
| A | * Spalte 1, Zeile 54 bis Spalte 2, Zeile 54; Spalte 4, Zeilen 64 bis 70; Figur 1 * | 3 | 3/06 |
| | -- | | |
| Y | US - A - 3 691 305 (W.P.E.HUEBNER) | 1 | |
| | * Spalte 14, Zeile 45 bis Spalte 15 Zeile 2; Figur 13 * | | |
| | & DE - A - 2 232 199 | | |
| | -- | | |
| A | DE - B - 1 157 655 (TELEFUNKEN) | 1 | RECHERCHIERTE SACHGEBIETE (Int. Cl.³) |
| | * Spalte 3, Zeilen 19 bis 43; Spalte 4, Zeilen 35 bis 68; Spalte 6, Zeilen 24 bis 40; Figuren 1,3,4 * | | H 04 J 3/06 3/04 H 04 L 7/08 H 04 L 5/24 |
| A | US - A - 3 757 050 (MASANORI MIZOTE) | 2 | H 04 B 9/00 H 04 L 7/06 |
| | * Spalte 2, Zeilen 59 bis Spalte 3, Zeile 13; Figuren 2, 3a * | | |
| | & DE - A - 2 165 750 | | |
| | ---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Den Haag | 09.03.1982 | STRASSEN |

EPA form 1503.1 06.78